# EUROPEAN PATENT SPECIFICATION

(11) **EP 4 050 342 B1**
(45) Date of publication and mention of the grant of the patent: **20.05.2026**
(21) Application number: 20879160.8
(22) Date of filing: 11.09.2020
(51) Int. Cl.: G01N 35/00, G01N 35/10

(54) **AUTOMATIC ANALYSIS DEVICE AND METHOD FOR DISPENSING REAGENT**
VORRICHTUNG UND VERFAHREN ZUR AUTOMATISCHEN ANALYSE VON REAGENZIENDISPENSION
DISPOSITIF D'ANALYSE AUTOMATIQUE ET PROCÉDÉ DE DISTRIBUTION DE RÉACTIF

(30) Priority: 24.10.2019 JP 2019193181
(43) Date of publication of application: 31.08.2022
(73) Proprietor: Hitachi High-Tech Corporation, Minato-ku Tokyo 105-6409 (JP)
(72) Inventor: TAMEZANE Hideto, Tokyo 105-6409 (JP); SHIMADA Masafumi, Tokyo 105-6409 (JP)
(74) Representative: Strehl & Partner mbB
(86) International application number: PCT/JP2020/034485
(87) International publication number: WO 2021/079645

(56) References cited:
- WO-A1-2015/174226
- WO-A1-2019/188599
- WO-A1-2019/188599
- JP-A- 2007 303 937
- JP-A- 2007 303 937
- JP-A- 2008 309 777
- JP-A- 2010 133 870
- JP-A- 2012 026 942
- JP-A- 2015 010 985
- JP-A- 2018 185 145
- US-A1- 2004 034 479

## Description

### Technical Field

The present invention relates to an automatic analyzer that makes qualitative or quantitative analysis of blood, urine, or other biological samples (hereinafter called a sample) and a method for dispensing a reagent.

### Background Art

As one example of an automatic analyzer that can detect the liquid level position with high accuracy regardless of whether or not there is a lid on a sample or reagent container and improve the sample or reagent dispensing accuracy, Patent Literature 1 describes an automatic analyzer that includes: a reaction mechanism in which a reaction container is placed; a spectrometer that analyzes a sample in the reaction container placed in the reaction mechanism; a liquid dispensing mechanism having a liquid dispensing nozzle for aspirating a liquid from a liquid container containing a liquid as a reagent or sample and discharging it in the reaction container placed in the reaction mechanism, a capacitance detection mechanism for detecting the capacitance value of the liquid dispensing nozzle, and a pressure sensor for detecting the pressure in the liquid dispensing nozzle; and a control unit for controlling operation of the reaction mechanism, spectrometer and liquid dispensing mechanism. The control unit includes: a nozzle position determination unit for determining the position of the liquid dispensing nozzle; a pressure determination unit for determining the pressure value from the pressure sensor; a liquid level detection unit for detecting the liquid level of the liquid from the capacitance detected by the capacitance detection mechanism; a normality/abnormality determination unit for detecting whether operation of the liquid dispensing mechanism is normal or abnormal according to the determinations by the nozzle position determination unit, pressure determination unit, and liquid level detection unit; and an operation instruction unit for giving an instruction for operation of the liquid dispensing mechanism according to the determination by the normality/abnormality determination unit.

### Citation List

### Patent Literature

Patent Literature 1: Japanese Patent Application Laid-Open No. 2018-185145 JP 2007 303937 A discloses an automatic analyzer that automatically performs analyses such as biochemical analysis and immunological tests. Related art is disclosed in WO 2019/188599 A1 **and** US 2004/034479 A1.

### Summary of Invention

### Technical Problem

The automatic analyzer makes qualitative or quantitative analysis by adding a reagent that specifically reacts with a specific component contained in a biological sample such as blood or urine (hereinafter called a sample) to cause reaction and measuring the absorbance and emission intensity of the reaction liquid.

In such an automatic analyzer, it is expected that the minimum required amount of a sample is made to react with a reagent, and the process to dispense the sample as the object of analysis and the reagent to be added to the sample and made to react, into a reaction container is required.

Since the amount of the sample or reagent which is dispended into the reaction container is small, the influence of the dispensing accuracy on the analysis accuracy is inevitably significant. Therefore, it is important to unfailingly detect a dispensing error that may cause deterioration in the dispensing accuracy.

Among dispensing errors, the causes of reagent dispensing errors include, for example, empty aspiration or dispensing from an insufficiently filled reagent container and clogging of the nozzle due to a foreign substance adhering to the lid of the reagent container.

As a technique that detects a dispensing error, a technique is proposed in which the change in the capacitance of the dispensing nozzle is used to perform liquid level detection status check and a pressure sensor is provided in the dispensing flow path including the dispensing nozzle to check for an abnormality of the nozzle according to the pressure change (see Patent Literature 1 described above).

In the automatic analyzer described in Patent Literature 1, if an error in dispensing a reagent is detected, uniform error processing is performed for the reagent container in which the error is detected (for example, an alarm is given).

However, it has been found that since uniform error processing is performed regardless of the estimated cause of the error for the reagent container in which the error is detected, the troubleshooting time for the operator of the automatic analyzer may be increased. In other words, it has become apparent from the present inventors' investigation that in troubleshooting, there is room for improvement in error processing.

The present invention has been made in view of the above problem and has an object to provide an automatic analyzer that can reduce the troubleshooting time for the operator as compared with before, and to provide a reagent dispensing method.

### Solution to Problem

**The above object is solved by an automatic analyzer and a method as set forth in the appended claims.**

### Advantageous Effects of Invention

According to the present invention, the time of troubleshooting by the operator can be reduced as compared with before. The other issues, elements and effects will become apparent from the description of the embodiments given below.

### Brief Description of Drawings

Fig. 1 is a view illustrating a schematic configuration of an automatic analyzer according to a first embodiment.
Fig. 2 is an enlarged view of a reagent dispensing mechanism in the automatic analyzer of the first embodiment.
Fig. 3 is a view illustrating one example of the appearance of a reagent container to be used in an automatic analyzer.
Fig. 4 is a functional block diagram illustrating details of a function of a control device in the automatic analyzer of the first embodiment.
Fig. 5 is a view in which determination criteria of an error processing unit of the control device in the automatic analyzer of the first embodiment are summarized.
Fig. 6 is a flowchart of a series of processing by the control device in the automatic analyzer of the first embodiment.
Fig. 7 is a view in which determination criteria of an error processing unit of a control device in an automatic analyzer of a second embodiment are summarized.
Fig. 8 is a flowchart of a series of processing by the control device in the automatic analyzer of the second embodiment.
Fig. 9 is a view in which determination criteria of an error processing unit of a control device in an automatic analyzer of a third embodiment of the present invention are summarized.
Fig. 10 is a flowchart of a series of processing by the control device in the automatic analyzer of the third embodiment.

### Description of Embodiments

Hereinafter, the automatic analyzer and reagent dispensing method according to the present invention will be described in detail referring to drawings. In the embodiments, only the third embodiment is an embodiment of the invention, whereas the first and second embodiments do not fall under the scope of the present independent claims. In what is described below, it is needless to say that the constituent elements (including elemental steps) are not always essential unless otherwise specified or theoretically apparently essential.

### First Embodiment

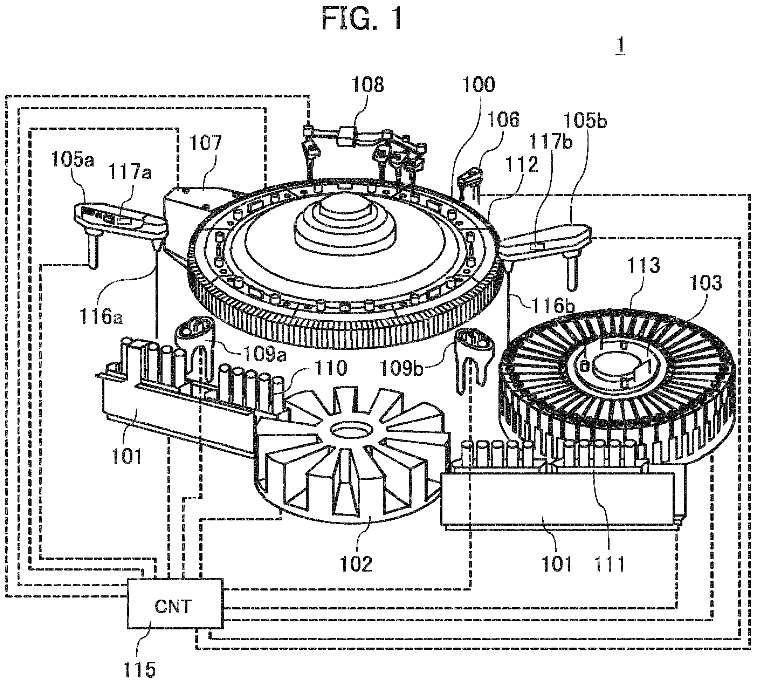

The automatic analyzer and reagent dispensing method according to the first embodiment is described below referring to Fig. 1 to Fig. 6.

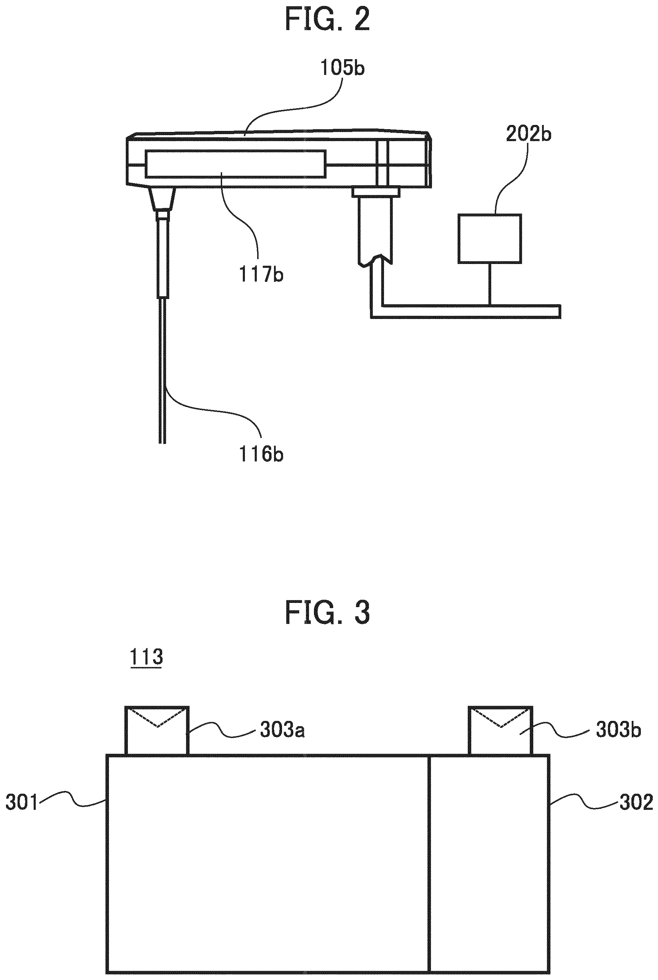

First, the configuration of the automatic analyzer according to this embodiment will be described referring to Fig. 1 to Fig. 3. Fig. 1 is a view illustrating the general configuration of the automatic analyzer according to the first embodiment. Fig. 2 is an enlarged view of the reagent dispensing mechanism and Fig. 3 is a view illustrating one example of the appearance of a reagent container to be used in the automatic analyzer.

The automatic analyzer shown in Fig. 1 is a device that automatically analyzes a sample and includes a conveyance line 101, a rack rotor 102, a reagent disk 103, a reaction disk 100, a sample dispensing mechanism 105a, a reagent dispensing mechanism 105b, a stirring mechanism 106, a spectrometer 107, a cleaning mechanism 108, nozzle cleaning mechanisms 109a and 109b, capacitance detection mechanisms 117a, 117b, a pressure sensor 202b (see Fig. 2) and a control device 115.

The rack rotor 102 is a device to set the sample container 110 holding a sample in the device and holds a plurality of sample racks 111 in which a plurality of sample containers 110 conveyed by the conveyance line 101 are placed. The rack rotor 102 may be of the disk type or alternatively it may hold a plurality of sample holders each holding one sample container 110. In addition, the rack rotor 102 may be omitted and a method in which a sample is dispensed directly from a sample container 110 on the conveyance line 101 may be adopted.

The reaction disk 100 houses a plurality of reaction containers 112 for reaction between a sample such as blood or urine and a reagent, which are mutually spaced at regular intervals along its circumferential direction. The reaction disk 100 is structured to keep the temperature of the reaction container 112 and the reaction liquid in it constant.

The reagent disk 103 is a storage case that can house a plurality of reagent bottles 113 each containing a reagent suitable for a measurement item, in a circumferential pattern. The reagent disk 103 is kept cool.

The sample dispensing mechanism 105a is installed between the reaction disk 100 and the rack rotor 102. At its tip, it has a sample dispensing nozzle 116a and moves the system water filled in the sample dispensing nozzle 116a and enables the sample dispensing nozzle 116a to aspirate or discharge the sample through segmented air. In addition, the sample dispensing mechanism 105a includes a syringe to move the system water and the movement is performed by driving the syringe. Furthermore, it also includes a drive mechanism to move up and down and rotate the sample dispensing nozzle 116a, such as a motor.

The sample dispensing nozzle 116a moves while drawing an arch with the rotation axis of the sample dispensing mechanism 105a as the center and performs various dispensing motions to aspirate the sample for measurement from the sample container 110 or reaction container 112 and discharge it into the reaction container 112.

The reagent dispensing mechanism 105b is installed between the reaction disk 100 and the reagent disk 103 and as shown in Fig. 2, at its tip it has a reagent dispensing nozzle 116b and moves the system water filled in the reagent dispensing nozzle 116a and enables the reagent dispensing nozzle 116b to aspirate or discharge the reagent through segmented air. In addition, the reagent dispensing mechanism 105b includes a syringe to move the system water and the movement is performed by driving the syringe. Furthermore, it also includes a drive mechanism to move up and down and rotate the reagent dispensing nozzle 116b, such as a motor.

The reagent dispensing nozzle 116b moves while drawing an arch with the rotation axis of the reagent dispensing mechanism 105b as the center and performs various dispensing motions to aspirate the reagent from a reagent container for first reagent 301 (see Fig. 3) or a reagent container for second reagent 302 (see Fig. 3) of the reagent bottle 113 and discharge it into the reaction container 112.

Fig. 3 is a view illustrating one example of the appearance of a reagent bottle 113. In Fig. 3, the reagent bottle 113 has a structure in which the reagent container for first reagent 301 and the reagent container for second reagent 302 are integrated and a lid 303a is provided on the reagent container for first reagent 301 and a lid 303b is provided on the reagent container for second reagent. Since it has the lids 303a and 303b, contact of the reagent with external air is reduced, thereby increasing the stability of the reagent.

The structure of the reagent bottle 113 is not limited to the one shown in Fig. 3; instead it may be a structure in which the reagent container for first reagent 301 and the reagent container for second reagent 302 are integrated without lids or a single bottle structure in which the reagent container for first reagent 301 and the reagent container for second reagent 302 are not integrated.

Referring back to Fig. 1 and Fig. 2, the capacitance detection mechanism 117b is installed in the reagent dispensing mechanism 105b and is a device that detects the liquid level of the reagent by detecting the capacitance value of the reagent dispensing nozzle 116b. It has a circuit that converts the capacitance of the reagent dispensing nozzle 116b into voltage and as the capacitance increases, the converted voltage also increases.

The capacitance detection mechanism 117a is a device that detects the liquid level of the sample by detecting the capacitance value of the sample dispensing nozzle 116a and its details are the same as details of the capacitance detection mechanism 117b.

Also, the capacitance detection mechanisms 117a and 117b each store a threshold value and if the capacitance exceeds the threshold value, they issue a liquid level detection signal. This threshold value is set as a voltage obtained by adding a fixed value to the capacitance of the sample dispensing nozzle 116a or reagent dispensing nozzle 116b positioned in the air. For example, a position sensor is installed at the upper limit point in the height direction of the sample dispensing nozzle 116a or reagent dispensing nozzle 116b and a threshold value is obtained by adding a fixed voltage to the converted voltage from the capacitance at the time when the nozzle leaves the position sensor at the upper limit point for lowering operation, and performing sample and hold operations.

In the present invention, the nozzle capacitance value is defined as a capacitance value between each dispensing nozzle and the casing (GND) constituting the base of the automatic analyzer 1.

As shown in Fig. 2, the pressure sensor 202b is connected to the pipe connected to the reagent dispensing nozzle 116b and intended to continue detecting the pressure in the reagent dispensing nozzle 116b to observe the change in the pressure and check the aspiration condition for clogging in the reagent dispensing nozzle 116b, empty aspiration or the like and monitor the piping for a defect.

The stirring mechanism 106 is a device that performs stirring to stabilize the reaction between the sample dispensed in the reaction container 112 and the added reagent and has, for example, a stirring blade or a spatula-shaped bar (not shown) at its tip. The stirring mechanism 106 is not limited to such a mechanism but instead it may use ultrasonic waves.

The spectrometer 107 is a device that makes colorimetric analysis of the reaction liquid produced by reaction between the sample and reagent in the reaction container 112 and is located opposite to the light source (not shown) located inside the reaction disk 100 in a manner to sandwich the reaction container 112.

The cleaning mechanism 108 is a device that aspirates the reaction liquid of which analysis has been finished and cleans the reaction container 112.

A nozzle cleaning mechanism 109a for cleaning the sample dispensing nozzle 116a of the sample dispensing mechanism 105a is installed between the reaction disk 100 and the rack rotor 102. Also, a nozzle cleaning mechanism 109b for cleaning the reagent dispensing nozzle 116b of the reagent dispensing mechanism 105b is installed between the reaction disk 100 and the reagent disk 103. Furthermore, a cleaning mechanism (not shown) for cleaning the stirring mechanism 106 is installed between the reaction disk 100 and the stirring mechanism 106 in order to prevent contamination.

The control device 115 is connected to the above various devices in the automatic analyzer 1 by wires or wirelessly to control operation of each device in the automatic analyzer 1. The control device 115 is a computer that includes a CPU, memory and so on and performs arithmetic processing to calculate the concentration of a specific component of the sample from the result of detection by the spectrometer 107.

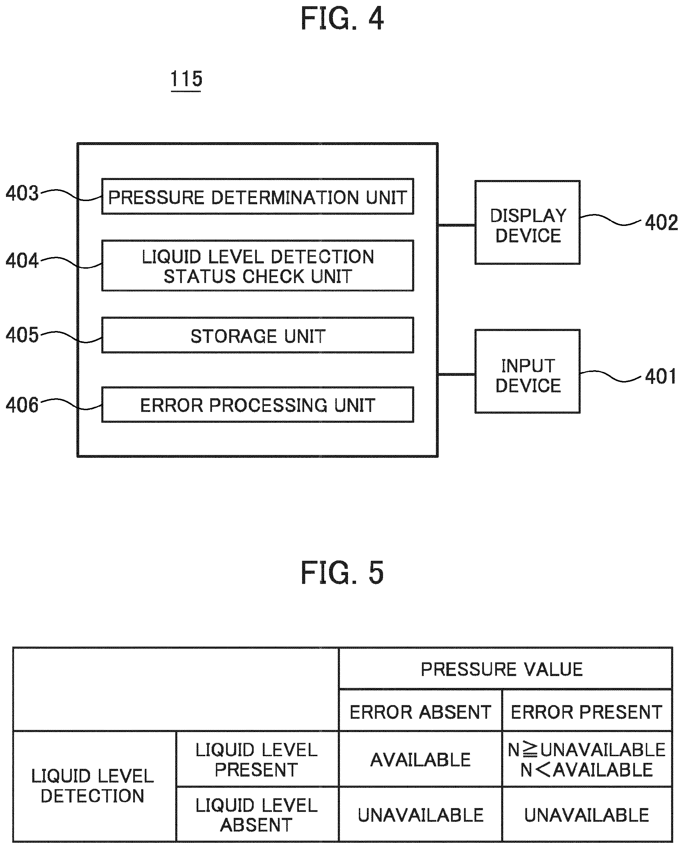

Control of operation of each device by the control device 115 is performed according to various programs stored in a storage device (not shown). The storage device stores not only the various programs to be used for measurement of the sample (including the reagent dispensing error determination program which will be explained later) but also various parameters entered through an input device 401 (see Fig. 4), information on the sample as the object of measurement (information for each sample type, etc.), measurement results and so on.

For operation control processing that is performed by the control device 115, one integrated program may be used or a plurality of programs for various processes may be used or these may be combined. Part or all of a program may be implemented by dedicated hardware or modularized.

In the present invention, the error determination program for reagent dispensing which will be described later can be applied to existing devices. For example, it can be applied by connecting a recording medium, including at least one recording medium among a semiconductor memory such as RAM, DRAM or SRAM, a magnetic disk such as a floppy disk, an optical disk such as MO, CD, DVD or Blue-ray (registered trademark) and a semiconductor memory such as a flash memory, to the control device 115 of an existing device and installing it.

Furthermore, when the operator or serviceman accesses the dedicated download site through the internet, downloads the program as necessary and installs it in the control device 115, the program can be applied. It can also be installed on the control device 115 side by automatic updating.

The control device 115 in this embodiment performs control to decide from the pressure value of the pressure sensor 202b whether or not there is a dispensing error, decide from the capacitance value detected by the capacitance detection mechanism 117a whether or not the reagent dispensing nozzle 116b reaches the reagent liquid surface after its lowering is stopped, and decide from the results of pressure error absence/presence determination and liquid level detection determination the processing content for the reagent container for first reagent 301 or the reagent container for second reagent 302, whichever is relevant. The control processes will be described in detail later.

The general configuration of the automatic analyzer 1 has been described above.

The configuration of the automatic analyzer is not limited to a biochemical analyzer that makes analysis for biochemical analysis items as shown in Fig. 1 but it may be an analyzer that makes analysis for other analysis items such as an immunoanalytical device that makes analyses for immunoanalytical items. In addition, the biochemical analyzer is not limited to the form shown in Fig. 1, but instead it may be a biochemical analyzer in which an analysis device for another analysis item, for example, electrolyte measurement is mounted.

The automatic analyzer is not limited to a single analysis module configuration as shown in Fig. 1, but instead it may have a configuration in which two or more modules, including analysis modules capable of making measurements for identical or different analysis items and a pretreatment module for making pretreatment, are connected by a conveyor.

The above sample analysis processing by the automatic analyzer 1 is generally performed in the following sequence.

First, the sample container 110 containing the sample as the object of analysis is set in the rack rotor 102 and rotated and moved to the sample aspirating position.

The sample dispensing mechanism 105a discharges the aspirated sample into a reaction container 112 on the reaction disk 100. The reagent dispensing mechanism 105b adds a reagent aspirated from the reagent container for first reagent 301 or reagent container for second reagent 302 of a reagent bottle 113 on the reagent disk 103, to the reaction container 112 and the sample and reagent in the reaction container 112 are mixed and stirred by the stirring mechanism 106.

After that, the optical characteristics of the light that has passed from the light source through the reaction liquid held in the reaction container 112 are measured by the spectrometer 107 and the measurement result is transmitted to the control device 115.

The control device 115 calculates the concentration of a specific component in the sample by arithmetic processing of the transmitted measurement result. The user is notified of the analysis result through a display device 402 (see Fig. 4) and the analysis result is recorded in the storage device.

Next, the function of the control device 115 of the automatic analyzer 1 in this embodiment will be described in detail referring to Fig. 4 and Fig. 5. Fig. 4 is a functional block diagram illustrating details of the function of the control device 115 and Fig. 5 is a view in which the determination criteria of the error processing unit 406 of the control device 115 in Fig. 5 are summarized.

As shown in Fig. 4, the control device 115 includes, in addition to the input device 401 and display device 402, various functional blocks such as a pressure determination unit 403, a liquid level detection status check unit 404, a storage unit 405, an error processing unit 406, and an operation control unit for controlling operation of various mechanisms (not shown).

The pressure determination unit 403 determines from the pressure value of the pressure sensor 202b whether or not there is a dispensing error.

The liquid level detection status check unit 404 checks whether or not the reagent dispensing nozzle 116b reaches the liquid level after its lowering is stopped, from the capacitance value detected by the capacitance detection mechanism 117b.

The storage unit 405 stores the results of determination by the pressure determination unit 403 and liquid level detection status check unit 404 for each reagent container (not for each reagent bottle 113 but for each of the reagent container for first reagent 301 and the reagent container for second reagent 302 in the reagent bottle 113 shown in Fig. 3). The storage unit 405 may be part of the above storage device or an independent storage medium.

The error processing unit 406 decides the processing content for the reagent container concerned from the results of determination by the pressure determination unit 403 and liquid level detection status check unit 404 and outputs an operation instruction value to the operation control unit.

For example, as shown in Fig. 5, when it is determined from pressure determination for the same reagent container that there is an error N times in a row, N being defined as 2 or more and when it is determined from the result of liquid level detection determination that a liquid level is detected, the error processing unit 406 performs processing in which the reagent container concerned is made unavailable, as the processing content.

On the other hand, when it is not determined from pressure determination for the same reagent container that there is an error N times in a row, N being defined as 2 or more, namely when it is determined that there is an error N-1 or less times in a row, it performs processing in which the reagent container concerned is made available, as the processing content.

In addition, as shown in Fig. 5, regardless of the result of pressure determination by the pressure sensor 202b, when it is determined from the result of liquid level detection determination that a liquid level is not detected, it performs processing in which the reagent container concerned is made unavailable, as the processing content.

In the present invention, the "processing content for the reagent container" includes status change processing such as processing in which the reagent container is made unavailable by setting the remaining amount of reagent to 0, processing in which the reagent container is made available by reducing the amount of remaining reagent for one time or processing in which the use of the reagent container is temporarily stopped as described later (third embodiment).

Processing for unavailability is not limited to setting the remaining amount to 0, but a method in which many types of information on reagents are invalidated may be adopted. However, setting the remaining amount to 0 is easy to perform and relatively reliable, so it is desirable.

For example, the following concrete methods for setting the remaining amount to 0 can be used: remaining amount zero information is written on the RFID tag attached to the reagent container or reagent bottle 113 or the remaining amount of reagent that is managed by the storage device is set to 0. By writing the remaining amount zero information on the RFID tag, even if the reagent container or bottle is mistakenly loaded on another analyzer, its loading cannot be completed because the remaining amount is recognized as 0, which easily and reliably relieves the operator from troublesome work in handling a plurality of analyzers.

Furthermore, even when it is not determined from pressure determination for the same reagent container that there is an error N times in a row, if it is determined that there is an error a fixed number of times or more in a prescribed number of times in the past and it is determined from the result of liquid level detection determination that a liquid level is detected, the error processing unit 406 performs processing in which the reagent container concerned is made unavailable, as the processing content.

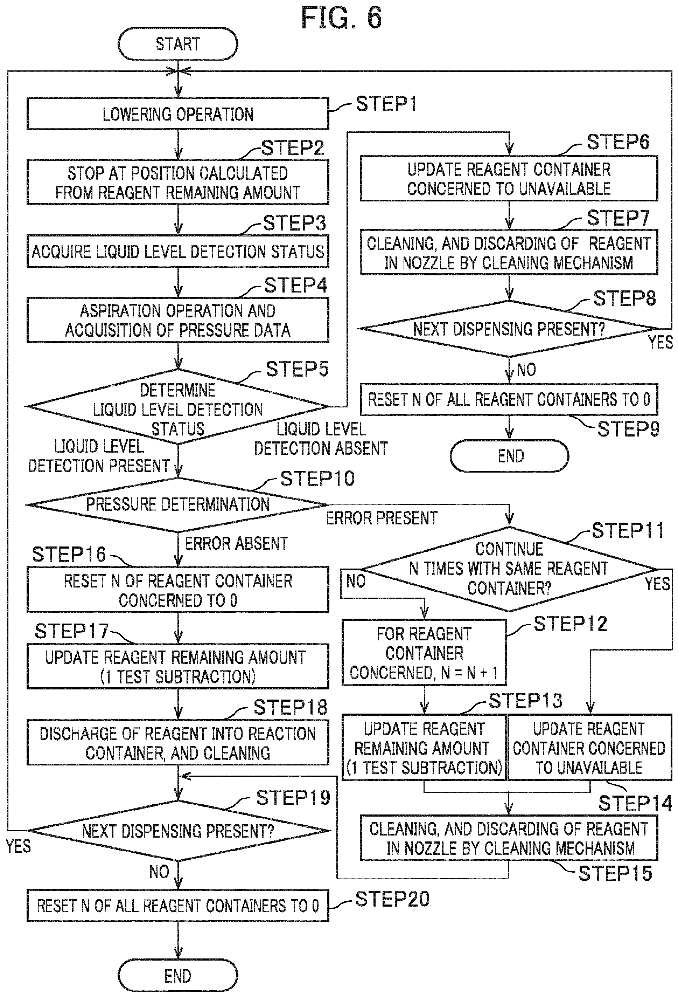

As for the timing to determine that a pressure error has occurred a fixed number of times or more in the prescribed number of times in the past, the determination may be just after it is determined for the same reagent container that an error has not occurred N times in a row (between Step S11 and Step S12 in Fig. 6, which will be explained later) or the determination may be replaced by determination as to whether or not it is determined for the same reagent container that there is an error N times in a row (Step S11 in Fig. 6).

The control device 115 in the present invention can count, for each reagent container (each of the reagent container for first reagent 301 and the reagent container for second reagent 302), the number of times when it is determined from pressure determination that there is an error, in the storage unit 405. The error processing unit 406 can reset the number of times for the reagent container concerned to zero each time when it is determined from pressure determination that there is no error and when the automatic analyzer 1 makes a transition to the standby state, it can reset the number of times to zero for all the reagent containers.

The control device 115 in the present invention can set a different value for each analysis item as the number of times N of pressure errors in a row which are counted by the storage unit 405. Although it is desirable for the maker to make an initial setting of value N for each analysis item (type of reagent) in the period of manufacture of the analyzer, the user can change the value in operation by operating the input device 401 or the display device 402.

Next, the flow of control by the control device 115 will be explained referring to Fig. 6. Fig. 6 is a flowchart of a series of processing by the control device 115.

As shown in Fig. 6, first the control device 115 moves the reagent dispensing nozzle 116b to above the reagent bottle 113 and then causes it to perform lowering operation (Step S1).

Then, the control device 115 stops lowering operation of the reagent dispensing nozzle 116b at a given position calculated from the amount of reagent filled in the reagent bottle 113 (Step S2).

Then, the liquid level detection status check unit 404 of the control device 115 acquires the value of capacitance detection of the reagent dispensing nozzle 116b by the capacitance detection mechanism 117b (Step S3). Step S3 corresponds to part of the liquid level detection step to decide whether or not the reagent dispensing nozzle 116b reaches the reagent liquid level, by detecting the capacitance value of the reagent dispensing nozzle 116b.

Then, the control device 115 causes aspiration of the reagent and acquires pressure data at that moment from the pressure sensor 202b (Step S4). Step S4 corresponds to the pressure detection step to detect the pressure in the reagent dispensing nozzle 116b during reagent dispensing.

Then, the liquid level detection status check unit 404 of the control device 115 determines the liquid level detection status from the capacitance value in Step S3 (Step S5). If it is determined in Step S5 that a liquid level is detected, the process goes to Step S10 or if it is determined that a liquid level is not detected, the process goes to Step S6. Step S5 corresponds to part of the liquid level detection step and part of the decision step.

If it is determined in Step S5 that a liquid level is not detected, the error processing unit 406 of the control device 115 updates the reagent container concerned to make it unavailable (Step S6). Step S6 corresponds to part of the decision step.

After that, the control device 115 moves the reagent dispensing nozzle 116b to the nozzle cleaning mechanism 109b to clean the inner wall and outer wall of the reagent dispensing nozzle 116b and discard the reagent aspirated in the previous step S4 (Step S7).

Then, the control device 115 checks whether a next dispensing job is present (Step S8). This step is taken because if the amount of reagent is insufficient, it is impossible to continue the use of the reagent container concerned. When it is determined that the next dispensing job is present, the process goes back to Step S1 or when it is determined that the next dispensing job is absent, the process goes to Step S9.

Then, the error processing unit 406 of the control device 115 resets the number of counts N for all the reagent containers to 0 (Step S9) to end the process.

On the other hand, when it is determined in Step S5 that a liquid level is detected, the error processing unit 406 of the control device 115 performs pressure determination, from the pressure value detected in the pressure detection step, to determine whether or not there is a dispensing error (Step S10). When it is determined in Step S10 that there is an error, the process goes to Step S11 or when it is determined that there is no error, the process goes to Step S16. Step S10 corresponds to the dispensing error determination step and part of the decision step to decide the processing content for the reagent container concerned from the results of determination on whether there is an error in pressure in the dispensing error determination step and detection determination in the liquid level detection step.

When it is determined in Step S10 that there is an error, the error processing unit 406 of the control device 115 checks whether an error has occurred N times in a row, N being defined as ≥2 (Step S11). Here it is assumed that the number of counts N can be set for each analysis item. When it is determined that an error has occurred N times in a row, the process goes to Step S14 and when it is determined that an error has not occurred N times in a row, the process goes to Step S12. Step S11 corresponds to part of the decision step.

This step is taken because, if the cause of error is clogging of the nozzle, the use of the reagent container concerned can be continued by discarding the reagent or cleaning in the nozzle cleaning mechanism 109b. This reduces the possibility that the reagent container may be made unavailable though its use can be continued, saves the operator the trouble in operation and also reduces the disadvantage in terms of cost.

Instead of Step S11 or between Step S11 and Step S12, by determining whether or not a pressure error has occurred a fixed number of times or more in a prescribed number of times in the past, if it is determined that an error has so occurred, the process can go not to Step S12 but to Step S14.

If it is determined in Step S11 for the same reagent container that an error has occurred less than N times in a row, the error processing unit 406 of the control device 115 sets the number of counts N for the reagent container concerned to N=N+1 (Step S12) and then updates the reagent remaining amount by 1 test subtraction (Step S13).

After that, the control device 115 moves the reagent dispensing nozzle 116b to the nozzle cleaning mechanism 109b, cleans the inner wall and outer wall of the reagent dispensing nozzle 116b, and causes the nozzle to discard the reagent aspirated in Step S4 (Step S15) and the process goes to Step S19.

When it is determined in Step S10 for the same reagent container that there is an error N times in a row, the error processing unit 406 of the control device 115 updates the reagent container concerned to make it unavailable (Step S14). Then, the process goes to Step S15.

Then, the control device 115 checks whether or not the next dispensing job is present (Step S19). When it is determined that the next dispensing job is present, the process goes back to Step S1 and when not, the process goes to Step S20.

When it is determined in Step S10 that there is no error, the error processing unit 406 of the control device 115 resets the number of counts N for the reagent container concerned to 0 (Step S16) and then updates the reagent remaining amount by 1 test subtraction (Step S17).

Next, the control device 115 moves the reagent dispensing nozzle 116b to above the reaction container 112 into which the reagent is to be discharged, causes the nozzle to discharge the reagent into the reaction container 112, then moves the reagent dispensing nozzle 116b to the nozzle cleaning mechanism 109b to clean the inner wall and outer wall of the reagent dispensing nozzle 116b (Step S18) and the process goes to Step S19.

After that, the error processing unit 406 of the control device 115 resets the number of counts N for all the reagent containers to 0 (Step S20) to end the process.

Next, the effects of this embodiment will be explained.

In the automatic analyzer 1 in the first embodiment, the control device 115 determines whether or not there is a dispensing error, from the pressure value of the pressure sensor 202b, determines whether or not the reagent dispensing nozzle 116b reaches the reagent liquid level after its lowering is stopped, from the capacitance value detected by the capacitance detection mechanism 117b, and decides the processing content for the reagent container concerned from the results of determination on whether there is an error in pressure and determination on liquid level detection.

Consequently, for the reagent container in which a reagent dispensing error has been detected, not uniform processing but error processing suitable for the estimated cause of error is performed on the reagent container concerned, so that the troubleshooting time required for the operator can be shortened as compared with existing analyzers.

For example, when it is determined from pressure determination for the same reagent container that there is an error N times in a row, N being defined as ≥2 and when it is determined from the result of liquid level detection determination that a liquid level is detected, processing in which the reagent container concerned is made unavailable is performed, and when it is determined that an error has occurred N-1 times or less in a row and it is determined that a liquid level is detected, the control device 115 performs processing in which the reagent container concerned is made available, as the processing content. This reduces the possibility that the reagent container may be made unavailable though the cause of error is clogging of the nozzle which can be resolved by cleaning or the like, thereby saving the operator the trouble in operation and also reducing the disadvantage in terms of cost.

Furthermore, regardless of the result of pressure determination by the pressure sensor 202b, when it is determined from the result of liquid level detection determination that a liquid level is not detected, the control device 115 performs processing in which the reagent container concerned is made unavailable, as the processing content. This reduces the possibility that an empty reagent container may exist in the reagent disk 103 and urges introduction of a new usable reagent container, thereby avoiding the risk that analysis might be interrupted due to insufficiency of the reagent.

In addition, the control device 115 counts, for each reagent container, the number of times when it is determined from pressure determination that there is an error, and resets the number of times for the reagent container concerned to zero each time when it is determined from pressure determination that there is no error, so that pressure error determination can be performed stably.

Furthermore, the control device 115 counts, for each reagent container, the number of times when it is determined from pressure determination that there is an error and when the automatic analyzer 1 makes a transition to the standby state, it resets the number of times for all the reagent containers to zero, so that pressure error determination can be performed stably.

In addition, the number of times N of pressure errors in a row as counted by the control device 115 is set for each analysis item so that pressure error determination suitable for the properties of the reagent such as viscosity can be performed for each reagent container and thus the troubleshooting time for the operator can be further reduced.

### Second Embodiment

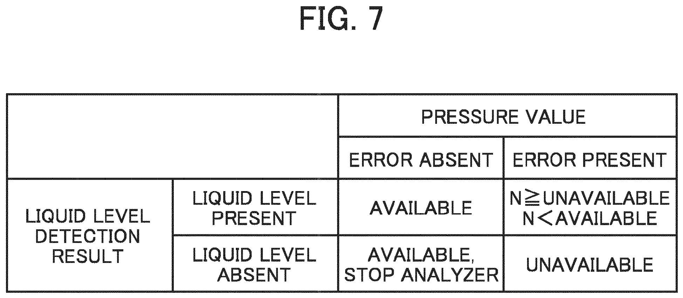

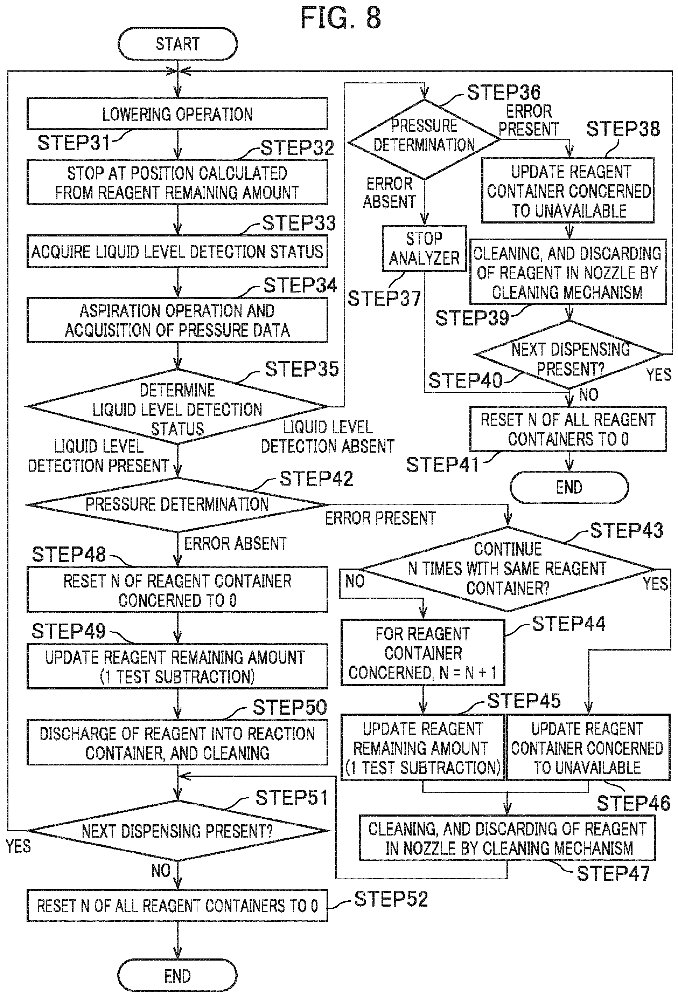

The automatic analyzer and the reagent dispensing method according to the second embodiment will be explained referring to Fig. 7 and Fig. 8. The same elements as in the first embodiment are designated by the same reference signs and their description is omitted. The same is true for the following embodiment. Fig. 7 is a view in which determination criteria of the error processing unit of the control device of the second embodiment are summarized and Fig. 8 is a flowchart of a series of processing by the control device.

In the above first embodiment, when the liquid level detection status check unit 404 determines that a liquid level is not detected, regardless of the result of the pressure determination unit 403 the reagent bottle 113 in which it is determined that a liquid level is not detected is updated so that it is unavailable. On the other hand, in the second embodiment, in processing for the case that the liquid level detection status check unit 404 determines that a liquid level is not detected, consideration is given to the result of the pressure determination unit 403.

As shown in Fig. 7, when it is determined from pressure determination that there is an error and it is determined from the result of liquid level detection determination that a liquid level is not detected, the error processing unit 406 of the control device 115 in this embodiment performs processing in which the reagent container concerned is made unavailable, as the processing content. This processing content is the same as in the first embodiment.

On the other hand, as shown in Fig. 7, when it is determined from pressure determination that there is no error and it is determined from the result of liquid level detection determination that a liquid level is not detected, the error processing unit 406 of the control device 115 performs processing in which the reagent container concerned is made available, as the processing content, and stops the automatic analyzer 1.

In this embodiment too, as shown in Fig. 7, when the liquid level detection status check unit 404 determines that a liquid level is detected, the processing content is the same as in the first embodiment.

Next, the flow of control by the control device 115 in this embodiment will be explained referring to Fig. 8.

Steps S31 to S35 in Fig. 8 are the same as Steps S1 to S5 in Fig. 6, respectively. In Fig. 8, in Step S35 in Fig. 8, when it is determined that a liquid level is detected, the process goes to Step S42 or when it is determined that a liquid level is not detected, the process goes to Step S36.

When it is determined in Step S35 that a liquid level is not detected, the error processing unit 406 of the control device 115 performs pressure determination from the pressure value detected in the pressure detection step to decide whether or not there is a dispensing error (Step S36). When it is determined that there is no error, the process goes to Step S37 or when it is determined that there is an error, the process goes to Step S38.

When it is determined in Step S36 that there is a pressure error, because a defect in a part other than the reagent container concerned is strongly suspected, the error processing unit 406 of the control device 115 keeps the reagent container concerned available and stops all operations of the automatic analyzer 1 safely (Step S37). After that, the process goes to Step S41.

On the other hand, when it is determined in Step S36 that there is a pressure error, the processing content in Step S38 and Step S39 and the processing content in Step S40 and Step S41 are the same as in Step S6 and Step S7, and Step S8 and Step S9 shown in Fig. 6.

Also, after it is determined in Step S35 that a liquid level is detected, Step S45 to Step S52 are the same as Step S10 to Step S20 in Fig. 6, respectively.

The other elements and operations are almost the same as the elements and operations of the above automatic analyzer and reagent dispensing method according to the first embodiment and their details are omitted.

The automatic analyzer and reagent dispensing method in the second embodiment of the present invention also bring about almost the same advantageous effects as the automatic analyzer and reagent dispensing method in the first embodiment.

In addition, when it is determined from pressure determination that there is no error and it is determined from the result of liquid level detection determination that a liquid level is not detected, the control device 115 performs processing in which the reagent container concerned is made available as the processing content and stops the automatic analyzer 1, so that consideration is given to the result of the pressure determination unit 403 in processing for the case that the liquid level detection status check unit 404 determines that a liquid level is not detected. Therefore, more suitable processing can be performed on the reagent container as the object, thereby further reducing the troubleshooting time for the operator.

Furthermore, when it is determined from pressure determination that there is an error and it is determined from the result of liquid level detection determination that a liquid level is not detected, the control device 115 performs processing in which the reagent container concerned is made unavailable, as the processing content, so that the use of the reagent container cannot be continued due to an insufficient amount of reagent and the operator is urged to make replenishment of reagent, thereby reducing interruption of analysis.

### Third Embodiment

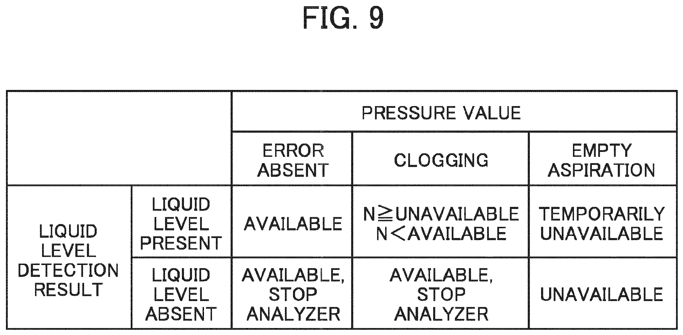

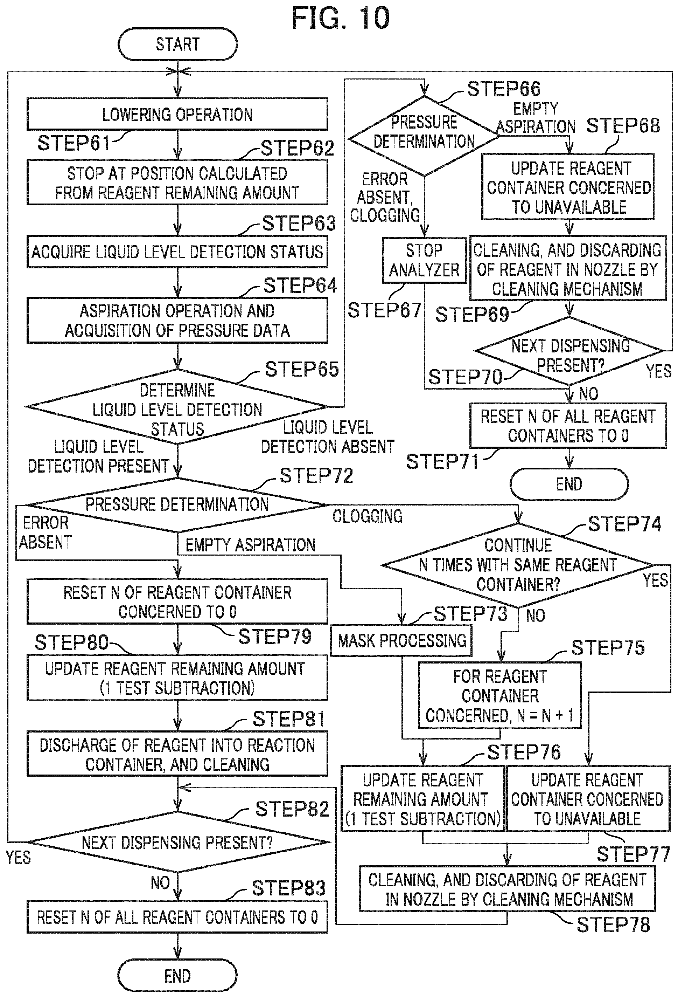

The automatic analyzer and the reagent dispensing method according to the third embodiment of the present invention will be explained referring to Fig. 9 and Fig. 10. Fig. 9 is a view in which determination criteria of the error processing unit of the third embodiment are summarized and Fig. 10 is a flowchart of a series of processing by the control device.

In the above first and second embodiments, the pressure determination unit 403 only determines whether or not there is a pressure error. On the other hand, in the third embodiment, the pressure determination unit 403 of the control device 115 determines whether an error has occurred due to clogging of the reagent dispensing nozzle 116b or empty aspiration or there is no error.

For the structure and criteria to determine whether an error has occurred due to clogging of the reagent dispensing nozzle 116b or empty aspiration or there is no error, the known techniques may be used.

The error processing unit 406 performs a different type of processing depending on the estimated cause of error, so it can perform more suitable processing for the reagent container as the object.

Specifically, as shown in Fig. 9, when the pressure determination unit 403 determines for the same reagent container that an error has occurred due to clogging of the reagent dispensing nozzle N times in a row, N being defined as N≥2, and when the liquid level detection status check unit 404 determines from the result of the liquid level detection determination that a liquid level is detected, the error processing unit 406 of the control device 115 in this embodiment performs, as the processing content, processing in which the reagent container is made unavailable.

On the other hand, when it is not determined for the same reagent container that an error has occurred due to clogging N times in a row, N being defined as 2 or more (when it is determined that an error has occurred due to clogging N-1 times or less in a row), processing in which the reagent container concerned is made available is performed as the processing content.

In the pressure determination unit 403 in this embodiment, the number of counts should be counted as different values in determination of clogging for the reagent container concerned and in determination of clogging without distinguishing among the reagent containers. When the pressure determination unit 403 determines, without distinguishing among the reagent containers, that an error has occurred due to clogging of the reagent dispensing nozzle 116b a prescribed number of times M (M may be unequal or equal to N), processing is performed to call the operator's attention by giving a device alarm or to perform special cleaning by the nozzle cleaning mechanism 109b to solve the problem of clogging.

As shown in Fig. 9, when the pressure determination unit 403 determines that a pressure error has occurred due to empty aspiration and when the liquid level detection status check unit 404 determines from the result of the liquid level detection determination that a liquid level is not detected, the error processing unit 406 of the control device 115 in this embodiment performs, as the processing content, processing in which the reagent container is made unavailable.

Furthermore, as shown in Fig. 9, when the pressure determination unit 403 determines that a pressure error has occurred due to empty aspiration and when the liquid level detection status check unit 404 determines from the result of liquid level detection determination that a liquid level is detected, the error processing unit 406 of the control device 115 in this embodiment performs, as the processing content, processing for temporary stop of the reagent container concerned. This processing is performed because generation of bubbles in the reagent container concerned is suspected and upon disappearance of bubbles its use can be restarted as usual.

"Processing for temporary stop" includes, for example, mask processing or processing to disallow dispensing until a given time has elapsed. Here, mask processing is processing that uses the mask function to temporarily stop measurement for a specific analysis item involving a specific component so that the reagent to be used for the specific analysis item is made unusable. Mask processing can be cancelled by selecting the cancel area displayed on the mask cancel screen so that the reagent container concerned can be used again.

As shown in Fig. 9, when the pressure determination unit 403 determines that there is no pressure error and the liquid level detection status check unit 404 determines from the result of liquid level detection determination that a liquid level is not detected or when the pressure determination unit 403 determines that an error has occurred due to clogging of the reagent dispensing nozzle 116b and the liquid level detection status check unit 404 determines from the result of liquid level detection determination that a liquid level is not detected, the error processing unit 406 of the control device 115 in this embodiment performs, as the processing content, processing in which the reagent container concerned is made available, and stops the automatic analyzer 1.

Next, the flow of control by the control device 115 in this embodiment will be explained referring to Fig. 10.

Steps S61 to S65 shown in Fig. 10 are the same as Steps S31 to S35 in Fig. 8, respectively. In Fig. 10, in Step S65, when it is determined that a liquid level is detected, the process goes to Step S72 or when it is determined that a liquid level is not detected, the process goes to Step S66.

If it is determined in Step S65 that a liquid level is not detected, the error processing unit 406 of the control device 115 performs pressure determination from the pressure value detected in the pressure detection step to decide whether there is a dispensing error (Step S66). Unlike Step S36 in Fig. 8, this step decides whether or not the pressure determination unit 403 determines that an error has occurred due to clogging of the reagent dispensing nozzle 116b or there is no error or an error has occurred due to empty aspiration. When it is determined that there is no error or an error has occurred due to clogging, the process goes to Step S67 or when it is determined that an error has occurred due to empty aspiration, the process goes to Step S68.

Step S67 to Step S71 in Fig. 10 are the same as Step S37 to Step S41 in Fig. 8, respectively.

When it is determined in Step S65 that a liquid level is detected, the error processing unit 406 of the control device 115 decides, from the pressure value detected in the pressure detection step, whether the pressure determination unit 403 determines that an error has occurred due to clogging of the reagent dispensing nozzle 116b or due to empty aspiration or there is no error (Step S72). When it is determined in this step that there is no error, the process goes to Step S79. On the other hand, when it is determined that an error has occurred due to clogging of the reagent dispensing nozzle 116b, the process goes to Step S74 or when it is determined that an error has occurred due to empty aspiration, the process goes to Step S73.

Then, the error processing unit 406 of the control device 115 performs mask processing (Step S73) and after that, the process goes to Step S76.

When it is determined in Step S72 that an error has occurred due to clogging, Step S74 to Step S78 are the same as Step S11 to Step S15 in Fig. 6 or Step S43 to Step S47 in Fig. 8, respectively. The steps after Step S79 in which it is determined that there is no error are the same as the steps after Step S16 in Fig. 6 or the steps after Step 48 in Fig. 8.

The other elements and operations are almost the same as the elements and operations of the above automatic analyzer and reagent dispensing method according to the first embodiment and their details are omitted.

The automatic analyzer and reagent dispensing method in the third embodiment of the present invention also bring about almost the same advantageous effects as the automatic analyzer and reagent dispensing method in the first embodiment.

Furthermore, it is determined whether an error has occurred due to clogging of the reagent dispensing nozzle 116b or due to empty aspiration or there is no error and as a result, when it is determined from pressure determination for the same reagent container that an error has occurred due to clogging N times in a row (N≥2) and it is determined from the result of liquid level detection determination that a liquid level is detected, the control device 115 performs processing in which the reagent container concerned is made unavailable as the processing content. When it is determined from pressure determination that an error has occurred due to clogging N-1 times or less and it is determined from the result of liquid level detection determination that a liquid level is detected, the control device 115 performs processing in which the reagent container concerned is made available as the processing content. Consequently, more suitable processing for the reagent container as the object can be performed, thereby further reducing the troubleshooting time for the operator.

When it is determined from pressure determination that an error has occurred due to empty aspiration and it is determined from the result of liquid level detection determination that a liquid level is not detected, processing in which the reagent container concerned is made unavailable is performed as the processing content, so more suitable processing for the reagent container as the object can also be performed, thereby further reducing the troubleshooting time for the operator.

When it is determined from pressure determination that an error has occurred due to empty aspiration and it is determined from the result of liquid level detection determination that a liquid level is detected, in a situation that generation of bubbles in the reagent container concerned is suspected, the reagent container is temporarily stopped to wait for disappearance of bubbles. This reduces the possibility that the reagent container may be taken out unnecessarily though it becomes usable as usual, thereby further reducing the troubleshooting time for the operator.

Furthermore, when it is determined from pressure determination that there is no error and it is determined from the result of liquid level detection determination that a liquid level is not detected, or when it is determined from pressure determination that an error has occurred due to clogging and it is determined from the result of liquid level detection determination that a liquid level is not detected, processing in which the reagent container concerned is made available is performed as the processing content and the automatic analyzer 1 is stopped. This reduces the possibility that analysis may be forcedly continued in a situation that a defect in a part other than the reagent container concerned is suspected, thereby preventing the time to obtain a correct analysis result from being lengthened.

### <Other>

An element of an embodiment may be replaced by an element of another embodiment or an element of an embodiment may be added to another embodiment. Also, for some elements of each embodiment, addition, deletion, or replacement of elements can be made.

### List of Reference Signs

1 Automatic analyzer
100 Reaction disk
101 Conveyance line
102 Rack rotor
103 Reagent disk
105a Sample dispensing mechanism
105b Reagent dispensing mechanism
106 Stirring mechanism
107 Spectrometer
108 Cleaning mechanism
109a, 109b Nozzle cleaning mechanism
110 Sample container
111 Sample rack
112 Reaction container
113 Reagent bottle
115 Control device (control unit)
116a Sample dispensing nozzle
116b Reagent dispensing nozzle
117a, 117b Capacitance detection mechanism

### (Capacitance detection unit)

202b Pressure sensor
301 Reagent container for first reagent (Reagent container)
302 Reagent container for second reagent (Reagent container)
303a, 303b Lid
401 Input device
402 Display device
403 Pressure determination unit
404 Liquid level detection status check unit
405 Storage unit
406 Error processing unit

## Claims

1. An automatic analyzer (1) that analyzes a sample, the automatic analyzer (1) comprising:
a reagent dispensing mechanism (105b) having a reagent dispensing nozzle (116b) that is configured to dispense, from a reagent container (301, 302), a reagent to be made react with the sample;
a capacitance detection unit (117b) that is configured to detect a capacitance value of the reagent dispensing nozzle (116b);
a pressure sensor (202b) that is configured to detect a pressure in the reagent dispensing nozzle (116b); and
a control unit (115) that is configured to
control an operation of each device in the automatic analyzer (1),
determine from a pressure value of the pressure sensor (202b) whether there is an error in the dispensing, and
determine from the capacitance value detected by the capacitance detection unit (117b) whether the reagent dispensing nozzle (116b), after its lowering is stopped, reaches a liquid level of the reagent, wherein the control unit (115) is configured to decide a processing content for the reagent container (301, 302) from results of the determination on whether there is an error in the pressure and the determination on the detection of the liquid level as follows:
a pressure determination unit (403) of the control unit (115) determines whether an error has occurred due to clogging of the reagent dispensing nozzle (116b) or due to empty aspiration, or whether no error has occurred, and when it is determined that there is an error in the pressure for the same reagent container (301, 302) due to the clogging N times in a row, N being defined as N ≥ 2, and when it is determined from the result of the detection determination that a liquid level is detected, the control unit (115) performs, as the processing content, processing in which the reagent container (301, 302) is unavailable,
when the pressure determination unit (403) determines, without distinguishing among the reagent containers (301, 302), that an error has occurred due to clogging of the reagent dispensing nozzle (116b) a prescribed number of times M, processing is performed to call an operator's attention by giving a device alarm or to perform special cleaning by a nozzle cleaning mechanism (109b) to solve the problem of clogging,
when it is determined, from the determination whether there is an error in the pressure, that there is an error due to the empty aspiration, and when it is determined from the result of the detection determination that no liquid level is detected, the control unit (115) performs, as the processing content, processing in which the reagent container (301, 302) is unavailable,
when it is determined, from the determination whether there is an error in the pressure, that there is an error due to the empty aspiration, and when it is determined from the result of the detection determination that a liquid level is detected, the control unit (115) performs, as the processing content, processing in which use of the reagent container (301, 302) is temporarily stopped, and
when it is determined, from the determination whether there is an error in the pressure, that there is no error and when it is determined from the result of the detection determination that no liquid level is detected, or when it is determined, from the determination whether there is an error in the pressure, that there is an error due to the clogging and when it is determined from the result of the detection determination that no liquid level is detected, the control unit (115) performs, as the processing content, processing in which the reagent container (301, 302) is available, and causes the automatic analyzer (1) to be stopped.

2. The automatic analyzer (1) according to claim 1, wherein the control unit (115) counts, for every reagent container (301, 302), the number of times when it is determined, from the determination whether there is an error in the pressure, that there is an error, and at every time when it is determined, from the determination whether there is an error in the pressure, that there is no error, the control unit (115) resets the number of times for the reagent container (301, 302) to zero.

3. The automatic analyzer (1) according to claim 1, wherein the control unit (115) counts, for every reagent container (301, 302), the number of times when it is determined, from the determination whether there is an error in the pressure, that there is an error, and when the automatic analyzer (1) makes a transition to standby, the control unit (115) resets the number of times for every reagent container (301, 302) to zero.

4. The automatic analyzer (1) according to claim 1, wherein when it is determined, by discriminating an error in the pressure due to clogging of the reagent dispensing nozzle (116b), an error due to empty aspiration, and no error, and from the determination whether there is an error in the pressure for the same reagent container (301, 302), that there is an error due to the clogging N - 1 times or less in a row, the N being defined as N ≥ 2, and when it is determined from the result of the detection determination that a liquid level is detected, the control unit (115) performs, as the processing content, processing in which the reagent container (301, 302) is available.

5. The automatic analyzer (1) according to any preceding claim, wherein the continuous number of times N when there is a pressure error, the N being counted by the control unit (115), is set for every analysis item.

6. A dispensing method of a reagent to be made react with a sample when the sample is analyzed in an automatic analyzer (1) in accordance with claim 1, the dispensing method comprising:
a pressure detection step of detecting a pressure in a reagent dispensing nozzle (116b) when the reagent is dispensed;
a liquid level detection step of determining whether the reagent dispensing nozzle (116b) for dispensing the reagent from a reagent container (301, 302) reaches a liquid level of the reagent by detecting a capacitance value of the reagent dispensing nozzle (116b);
a dispensing error determination step of determining, by a control unit (115), from a pressure value detected in the pressure detection step whether or not there is an error in the dispensing; and
a decision step of deciding, by the control unit (115), a processing content for the reagent container (301, 302) from results of the determination on whether there is an error in the pressure in the dispensing error determination step and the detection determination in the liquid level detection step as follows:
a pressure determination unit (403) of the control unit (115) determines whether an error has occurred due to clogging of the reagent dispensing nozzle (116b) or due to empty aspiration, or whether no error has occurred, and when it is determined that there is an error in the pressure for the same reagent container (301, 302) due to the clogging N times in a row, N being defined as N ≥ 2, and when it is determined from the result of the detection determination that a liquid level is detected, the control unit (115) performs, as the processing content, processing in which the reagent container (301, 302) is unavailable,
when the pressure determination unit (403) determines, without distinguishing among the reagent containers (301, 302), that an error has occurred due to clogging of the reagent dispensing nozzle (116b) a prescribed number of times M, processing is performed to call an operator's attention by giving a device alarm or to perform special cleaning by a nozzle cleaning mechanism (109b) to solve the problem of clogging,
when it is determined, from the determination whether there is an error in the pressure, that there is an error due to the empty aspiration, and when it is determined from the result of the detection determination that no liquid level is detected, the control unit (115) performs, as the processing content, processing in which the reagent container (301, 302) is unavailable,
when it is determined, from the determination whether there is an error in the pressure, that there is an error due to the empty aspiration, and when it is determined from the result of the detection determination that a liquid level is detected, the control unit (115) performs, as the processing content, processing in which use of the reagent container (301, 302) is temporarily stopped, and
when it is determined, from the determination whether there is an error in the pressure, that there is no error and when it is determined from the result of the detection determination that no liquid level is detected, or when it is determined, from the determination whether there is an error in the pressure, that there is an error due to the clogging and when it is determined from the result of the detection determination that no liquid level is detected, the control unit (115) performs, as the processing content, processing in which the reagent container (301, 302) is available, and causes the automatic analyzer (1) to be stopped.

## Patentansprüche

1. Automatischer Analysator (1), der eine Probe analysiert, wobei der automatische Analysator (1) umfasst:
einen Reagens-Abgabemechanismus (105b) mit einer Reagens-Abgabedüse (116b), die dazu konfiguriert ist, aus einem Reagens-Behälter (301, 302) ein Reagens abzugeben, das mit der Probe reagieren soll;
eine Kapazitätsdetektionseinheit (117b), die dazu konfiguriert ist, einen Kapazitätswert der Reagens-Abgabedüse (116b) zu detektieren;
einen Drucksensor (202b), der dazu konfiguriert ist, einen Druck in der Reagens-Abgabedüse (116b) zu detektieren; und
eine Steuereinheit (115), die dazu konfiguriert ist,
einen Betrieb jeder Vorrichtung in dem automatischen Analysator (1) zu steuern,
aus einem Druckwert des Drucksensors (202b) zu bestimmen, ob ein Fehler bei der Abgabe vorliegt, und
aus dem von der Kapazitätsdetektionseinheit (117b) detektierten Kapazitätswert zu bestimmen, ob die Reagens-Abgabedüse (116b) nach dem Stoppen ihres Absenkens einen Flüssigkeitspegel des Reagens erreicht,
wobei die Steuereinheit (115) dazu konfiguriert ist, einen Verarbeitungsinhalt für den Reagens-Behälter (301, 302) aus Ergebnissen der Bestimmung, ob ein Fehler im Druck vorliegt, und der Bestimmung der Detektion des Flüssigkeitspegels wie folgt zu entscheiden:
eine Druckbestimmungseinheit (403) der Steuereinheit (115) bestimmt, ob ein Fehler aufgrund einer Verstopfung der Reagens-Abgabedüse (116b) oder aufgrund einer Leeransaugung aufgetreten ist oder ob kein Fehler aufgetreten ist, und wenn bestimmt wird, dass ein Fehler im Druck für denselben Reagens-Behälter (301, 302) aufgrund Verstopfung N-mal in Folge vorliegt, wobei N als N ≥ 2 definiert ist, und wenn aus dem Ergebnis der Detektionsbestimmung bestimmt wird, dass ein Flüssigkeitspegel detektiert wird, die Steuereinheit (115) als Verarbeitungsinhalt eine Verarbeitung durchführt, bei der der Reagens-Behälter (301, 302) nicht verfügbar ist,
wenn die Druckbestimmungseinheit (403) bestimmt, ohne zwischen den Reagens-Behältern (301, 302) zu unterscheiden, dass ein Fehler aufgrund Verstopfung der Reagens-Abgabedüse (116b) eine vorgeschriebene Anzahl von Malen M aufgetreten ist, eine Verarbeitung durchgeführt wird, um die Aufmerksamkeit eines Bedieners durch Ausgabe eines Gerätealarms zu erregen oder eine spezielle Reinigung durch einen Düsenreinigungsmechanismus (109b) durchzuführen, um das Problem der Verstopfung zu lösen,
wenn aus der Bestimmung, ob ein Fehler im Druck vorliegt, bestimmt wird, dass ein Fehler aufgrund Leeransaugung vorliegt, und wenn aus dem Ergebnis der Detektionsbestimmung bestimmt wird, dass kein Flüssigkeitspegel detektiert wird, die Steuereinheit (115) als Verarbeitungsinhalt eine Verarbeitung durchführt, bei der der Reagens-Behälter (301, 302) nicht verfügbar ist,
wenn aus der Bestimmung, ob ein Fehler im Druck vorliegt, bestimmt wird, dass ein Fehler aufgrund Leeransaugung vorliegt, und wenn aus dem Ergebnis der Detektionsbestimmung bestimmt wird, dass ein Flüssigkeitspegel detektiert wird, die Steuereinheit (115) als Verarbeitungsinhalt eine Verarbeitung durchführt, bei der die Verwendung des Reagens-Behälters (301, 302) vorübergehend gestoppt wird, und
wenn aus der Bestimmung, ob ein Fehler im Druck vorliegt, bestimmt wird, dass kein Fehler vorliegt und wenn aus dem Ergebnis der Detektionsbestimmung bestimmt wird, dass kein Flüssigkeitspegel detektiert wird, oder wenn aus der Bestimmung, ob ein Fehler im Druck vorliegt, bestimmt wird, dass ein Fehler aufgrund Verstopfung vorliegt und wenn aus dem Ergebnis der Detektionsbestimmung bestimmt wird, dass kein Flüssigkeitspegel detektiert wird, die Steuereinheit (115) als Verarbeitungsinhalt eine Verarbeitung durchführt, bei der der Reagens-Behälter (301, 302) verfügbar ist, und veranlasst, dass der automatische Analysator (1) gestoppt wird.

2. Automatischer Analysator (1) nach Anspruch 1, wobei die Steuereinheit (115) für jeden Reagens-Behälter (301, 302) die Anzahl der Male zählt, wenn aus der Bestimmung, ob ein Fehler im Druck vorliegt, bestimmt wird, dass ein Fehler vorliegt, und jedes Mal, wenn aus der Bestimmung, ob ein Fehler im Druck vorliegt, bestimmt wird, dass kein Fehler vorliegt, die Steuereinheit (115) die Anzahl der Male für den Reagens-Behälter (301, 302) auf null zurücksetzt.

3. Automatischer Analysator (1) nach Anspruch 1, wobei die Steuereinheit (115) für jeden Reagens-Behälter (301, 302) die Anzahl der Male zählt, wenn aus der Bestimmung, ob ein Fehler im Druck vorliegt, bestimmt wird, dass ein Fehler vorliegt, und wenn der automatische Analysator (1) einen Übergang in den Bereitschaftszustand macht, die Steuereinheit (115) die Anzahl der Male für jeden Reagens-Behälter (301, 302) auf null zurücksetzt.

4. Automatischer Analysator (1) nach Anspruch 1, wobei, wenn durch Unterscheidung eines Fehlers im Druck aufgrund Verstopfung der Reagens-Abgabedüse (116b), eines Fehlers aufgrund Leeransaugung und keines Fehlers und aus der Bestimmung, ob ein Fehler im Druck für denselben Reagens-Behälter (301, 302) vorliegt, bestimmt wird, dass ein Fehler aufgrund Verstopfung N-1 mal oder weniger in Folge vorliegt, wobei N als N ≥ 2 definiert ist, und wenn aus dem Ergebnis der Detektionsbestimmung bestimmt wird, dass ein Flüssigkeitspegel detektiert wird, die Steuereinheit (115) als Verarbeitungsinhalt eine Verarbeitung durchführt, bei der der Reagens-Behälter (301, 302) verfügbar ist.

5. Automatischer Analysator (1) nach einem der vorhergehenden Ansprüche, wobei die fortlaufende Anzahl der Male N, wenn ein Druckfehler vorliegt, wobei N von der Steuereinheit (115) gezählt wird, für jeden Analysegegenstand festgelegt wird.

6. Abgabeverfahren eines Reagens, das mit einer Probe reagieren soll, wenn die Probe in einem automatischen Analysator (1) nach Anspruch 1 analysiert wird, wobei das Abgabeverfahren umfasst:
einen Druckdetektionsschritt des Detektierens eines Drucks in einer Reagens-Abgabedüse (116b), wenn das Reagens abgegeben wird;
einen Flüssigkeitspegeldetektionsschritt des Bestimmens, ob die Reagens-Abgabedüse (116b) zur Abgabe des Reagens aus einem Reagens-Behälter (301, 302) einen Flüssigkeitspegel des Reagens erreicht, indem ein Kapazitätswert der Reagens-Abgabedüse (116b) detektiert wird;
einen Abgabefehlerbestimmungsschritt des Bestimmens durch eine Steuereinheit (115) aus einem im Druckdetektionsschritt detektierten Druckwert, ob ein Fehler bei der Abgabe vorliegt oder nicht; und
einen Entscheidungsschritt des Entscheidens durch die Steuereinheit (115) eines Verarbeitungsinhalts für den Reagens-Behälter (301, 302) aus Ergebnissen der Bestimmung, ob ein Fehler im Druck im Abgabefehlerbestimmungsschritt vorliegt, und der Detektionsbestimmung im Flüssigkeitspegeldetektionsschritt wie folgt:
eine Druckbestimmungseinheit (403) der Steuereinheit (115) bestimmt, ob ein Fehler aufgrund einer Verstopfung der Reagens-Abgabedüse (116b) oder aufgrund einer Leeransaugung aufgetreten ist oder ob kein Fehler aufgetreten ist, und wenn bestimmt wird, dass ein Fehler im Druck für denselben Reagens-Behälter (301, 302) aufgrund Verstopfung N-mal in Folge vorliegt, wobei N als N ≥ 2 definiert ist, und wenn aus dem Ergebnis der Detektionsbestimmung bestimmt wird, dass ein Flüssigkeitspegel detektiert wird, die Steuereinheit (115) als Verarbeitungsinhalt eine Verarbeitung durchführt, bei der der Reagens-Behälter (301, 302) nicht verfügbar ist,
wenn die Druckbestimmungseinheit (403) bestimmt, ohne zwischen den Reagens-Behältern (301, 302) zu unterscheiden, dass ein Fehler aufgrund Verstopfung der Reagens-Abgabedüse (116b) eine vorgeschriebene Anzahl von Malen M aufgetreten ist, eine Verarbeitung durchgeführt wird, um die Aufmerksamkeit eines Bedieners durch Ausgabe eines Gerätealarms zu erregen oder eine spezielle Reinigung durch einen Düsenreinigungsmechanismus (109b) durchzuführen, um das Problem der Verstopfung zu lösen,
wenn aus der Bestimmung, ob ein Fehler im Druck vorliegt, bestimmt wird, dass ein Fehler aufgrund Leeransaugung vorliegt, und wenn aus dem Ergebnis der Detektionsbestimmung bestimmt wird, dass kein Flüssigkeitspegel detektiert wird, die Steuereinheit (115) als Verarbeitungsinhalt eine Verarbeitung durchführt, bei der der Reagens-Behälter (301, 302) nicht verfügbar ist,
wenn aus der Bestimmung, ob ein Fehler im Druck vorliegt, bestimmt wird, dass ein Fehler aufgrund Leeransaugung vorliegt, und wenn aus dem Ergebnis der Detektionsbestimmung bestimmt wird, dass ein Flüssigkeitspegel detektiert wird, die Steuereinheit (115) als Verarbeitungsinhalt eine Verarbeitung durchführt, bei der die Verwendung des Reagens-Behälters (301, 302) vorübergehend gestoppt wird, und
wenn aus der Bestimmung, ob ein Fehler im Druck vorliegt, bestimmt wird, dass kein Fehler vorliegt und wenn aus dem Ergebnis der Detektionsbestimmung bestimmt wird, dass kein Flüssigkeitspegel detektiert wird, oder wenn aus der Bestimmung, ob ein Fehler im Druck vorliegt, bestimmt wird, dass ein Fehler aufgrund Verstopfung vorliegt und wenn aus dem Ergebnis der Detektionsbestimmung bestimmt wird, dass kein Flüssigkeitspegel detektiert wird, die Steuereinheit (115) als Verarbeitungsinhalt eine Verarbeitung durchführt, bei der der Reagens-Behälter (301, 302) verfügbar ist, und veranlasst, dass der automatische Analysator (1) gestoppt wird.

## Revendications

1. Analyseur automatique (1) qui analyse un échantillon, l'analyseur automatique (1) comprenant :
un mécanisme (105b) de distribution de réactif ayant un embout (116b) de distribution de réactif qui est configuré pour distribuer, depuis un récipient (301, 302) de réactif, un réactif devant être mis à réagir avec l'échantillon ;
une unité (117b) de détection de capacitance qui est configurée pour détecter une valeur de capacitance de l'embout (116b) de distribution de réactif ;
un capteur (202b) de pression qui est configuré pour détecter une pression dans l'embout (116b) de distribution de réactif ; et
une unité (115) de commande qui est configurée pour
commander un fonctionnement de chaque dispositif dans l'analyseur automatique (1),
déterminer à partir d'une valeur de pression du capteur (202b) de pression s'il y a un erreur dans la distribution, et
déterminer à partir de la valeur de capacitance détectée par l'unité (117b) de détection de capacitance si l'embout (116b) de distribution de réactif, après que son abaissement a été stoppé, atteint un niveau de liquide du réactif,
dans lequel l'unité (115) de commande est configurée pour décider d'un contenu de traitement pour le récipient (301, 302) de réactif à partir de résultats de la détermination s'il y a ou non une erreur dans la pression et la détermination sur la détection du niveau de liquide comme suit :
une unité (403) de détermination de pression de l'unité (115) de commande détermine si une erreur est survenue du fait d'un colmatage de l'embout (116b) de distribution de réactif ou du fait d'une aspiration à vide, ou si aucune erreur n'est survenue, et lorsqu'il est déterminé qu'il y a une erreur dans la pression pour le même récipient (301, 302) de réactif du fait du colmatage N fois d'affilée, N étant défini comme N ≥ 2, et lorsqu'il est déterminé à partir du résultat de la détermination de détection qu'un niveau de liquide est détecté, l'unité (115) de commande exécute, comme le contenu de traitement, un traitement dans lequel le récipient (301, 302) de réactif est indisponible,
lorsque l'unité (403) de détermination de pression détermine, sans faire de distinction entre les récipients (301, 302) de réactif, qu'une erreur est survenue du fait d'un colmatage de l'embout (116b) de distribution de réactif un nombre prescrit de fois M, un traitement est exécuté pour attirer l'attention d'un opérateur en donnant une alarme de dispositif ou pour exécuter un nettoyage spécial par un mécanisme (109b) de nettoyage d'embout pour résoudre le problème de colmatage,
lorsqu'il est déterminé, à partir de la détermination s'il y a une erreur dans la pression, qu'il y a une erreur du fait de l'aspiration à vide, et lorsqu'il est déterminé à partir du résultat de la détermination de détection qu'aucun niveau de liquide n'est détecté, l'unité (115) de commande exécute, comme le contenu de traitement, un traitement dans lequel le récipient (301, 302) de réactif est indisponible,
lorsqu'il est déterminé, à partir de la détermination s'il y a une erreur dans la pression, qu'il y a une erreur du fait de l'aspiration à vide, et lorsqu'il est déterminé à partir du résultat de la détermination de détection qu'un niveau de liquide est détecté, l'unité (115) de commande exécute, comme le contenu de traitement, un traitement dans lequel l'utilisation du récipient (301, 302) de réactif est temporairement stoppée, et
lorsqu'il est déterminé, à partir de la détermination s'il y a une erreur dans la pression, qu'il n'y a pas d'erreur et lorsqu'il est déterminé à partir du résultat de la détermination de détection qu'aucun niveau de liquide n'est détecté, ou lorsqu'il est déterminé, à partir de la détermination s'il y a une erreur dans la pression, ou lorsqu'il est déterminé, à partir de la détermination s'il y a une erreur dans la pression, qu'il y a une erreur du fait du colmatage et lorsqu'il est déterminé à partir du résultat de la détermination de détection qu'aucun niveau de liquide n'est détecté, l'unité (115) de commande exécute, comme le contenu de traitement, un traitement dans lequel le récipient (301, 302) de réactif est disponible, et amène l'analyseur automatique (1) à être stoppé.

2. Analyseur automatique (1) selon la revendication 1, dans lequel l'unité (115) de commande compte, pour chaque récipient (301, 302) de réactif, le nombre de fois où il est déterminé, à partir de la détermination s'il y a une erreur dans la pression, qu'il y a une erreur, et à chaque fois qu'il est déterminé, à partir de la détermination s'il y a une erreur dans la pression, qu'il n'y a pas d'erreur, l'unité (115) de commande réinitialise le nombre de fois pour le récipient (301, 302) de réactif à zéro.

3. Analyseur automatique (1) selon la revendication 1, dans lequel l'unité (115) de commande compte, pour chaque récipient (301, 302) de réactif, le nombre de fois où il est déterminé, à partir de la détermination s'il y a une erreur dans la pression, qu'il y a une erreur, et lorsque l'analyseur automatique (1) effectue une transition sur une mise en attente, l'unité (115) de commande réinitialise le nombre de fois pour chaque récipient (301, 302) de réactif à zéro.

4. Analyseur automatique (1) selon la revendication 1, dans lequel, lorsqu'il est déterminé, par discrimination entre une erreur dans la pression du fait d'un colmatage de l'embout (116b) de distribution de réactif, une erreur du fait d'une aspiration à vide, et pas d'erreur, et à partir de la détermination s'il y a une erreur dans la pression pour le même récipient (301, 302) de réactif, qu'il y a une erreur du fait du colmatage N - 1 fois ou moins d'affilée, le N étant défini comme N ≥ 2, et lorsqu'il est déterminé à partir du résultat de la détermination de détection qu'un niveau de liquide est détecté, l'unité (115) de commande exécute, comme le contenu de traitement, un traitement dans lequel le récipient (301, 302) de réactif est disponible.

5. Analyseur automatique (1) selon une quelconque revendication précédente, dans lequel le nombre continu de fois N lorsqu'il y a une erreur de pression, le N étant compté par l'unité (115) de commande, est fixé pour chaque item d'analyse.

6. Procédé de distribution d'un réactif devant être fait réagir avec un échantillon lorsque l'échantillon est analysé dans un analyseur automatique (1) selon la revendication 1, le procédé de distribution comprenant :
une étape de détection de pression pour détecter une pression dans un embout (116b) de distribution de réactif lorsque le réactif est distribué ;
une étape de détection de niveau de liquide pour déterminer si l'embout (116b) de distribution de réactif pour distribuer le réactif depuis un récipient (301, 302) de réactif atteint un niveau de liquide du réactif en détectant une valeur de capacitance de l'embout (116b) de distribution de réactif ;
une étape de détermination d'erreur de distribution pour déterminer, par une unité (115) de commande, à partir d'une valeur de pression détectée à l'étape de détection de pression s'il y a ou non une erreur dans la distribution ; et
une étape de décision pour décider, par l'unité (115) de commande, d'un contenu de traitement pour le récipient (301, 302) de réactif à partir de résultats de la détermination s'il y a une erreur dans la pression à l'étape de détermination d'erreur de distribution et de la détermination de détection à l'étape de détection de niveau de liquide comme suit :
une unité (403) de détermination de pression de l'unité (115) de commande détermine si une erreur est survenue du fait d'un colmatage de l'embout (116b) de distribution de réactif ou du fait d'une aspiration à vide, ou si aucune erreur n'est survenue, et lorsqu'il est déterminé qu'il y a une erreur dans la pression pour le même récipient (301, 302) de réactif du fait du colmatage N fois d'affilée, N étant défini comme N ≥ 2, et lorsqu'il est déterminé à partir du résultat de la détermination de détection qu'un niveau de liquide est détecté, l'unité (115) de commande exécute, comme le contenu de traitement, un traitement dans lequel le récipient (301, 302) de réactif est indisponible,
lorsque l'unité (403) de détermination de pression détermine, sans faire de distinction entre les récipients (301, 302) de réactif, qu'une erreur est survenue du fait d'un colmatage de l'embout (116b) de distribution de réactif un nombre prescrit de fois M, un traitement est exécuté pour attirer l'attention d'un opérateur en donnant une alarme de dispositif ou pour exécuter un nettoyage spécial par un mécanisme (109b) de nettoyage d'embout pour résoudre le problème de colmatage,
lorsqu'il est déterminé, à partir de la détermination s'il y a une erreur dans la pression, qu'il y a une erreur du fait de l'aspiration à vide, et lorsqu'il est déterminé à partir du résultat de la détermination de détection qu'aucun niveau de liquide n'est détecté, l'unité (115) de commande exécute, comme le contenu de traitement, un traitement dans lequel le récipient (301, 302) de réactif est indisponible,
lorsqu'il est déterminé, à partir de la détermination s'il y a une erreur dans la pression, qu'il y a une erreur du fait de l'aspiration à vide, et lorsqu'il est déterminé à partir du résultat de la détermination de détection qu'un niveau de liquide est détecté, l'unité (115) de commande exécute, comme le contenu de traitement, un traitement dans lequel l'utilisation du récipient (301, 302) de réactif est temporairement stoppée, et
lorsqu'il est déterminé, à partir de la détermination s'il y a une erreur dans la pression, qu'il n'y a pas d'erreur et lorsqu'il est déterminé à partir du résultat de la détermination de détection qu'aucun niveau de liquide n'est détecté, ou lorsqu'il est déterminé, à partir de la détermination s'il y a une erreur dans la pression, ou lorsqu'il est déterminé, à partir de la détermination s'il y a une erreur dans la pression, qu'il y a une erreur du fait du colmatage et lorsqu'il est déterminé à partir du résultat de la détermination de détection qu'aucun niveau de liquide n'est détecté, l'unité (115) de commande exécute, comme le contenu de traitement, un traitement dans lequel le récipient (301, 302) de réactif est disponible, et amène l'analyseur automatique (1) à être stoppé.
